(19) Europäisches Patentamt European Patent Office Office européen des brevets

(11) **EP 3 108 453 B1**

(12) **EUROPEAN PATENT SPECIFICATION**

(45) Date of publication and mention
of the grant of the patent:
**01.01.2020 Bulletin 2020/01**

(21) Application number: **15706747.1**

(22) Date of filing: **18.02.2015**

(51) Int Cl.:
**G06T 17/05** (2011.01) **G06T 17/00** (2006.01)

(86) International application number:
**PCT/EP2015/053439**

(87) International publication number:
**WO 2015/124641 (27.08.2015 Gazette 2015/34)**

(54) **METHOD FOR SELECTING DATA FILES FOR DOWNLOADING**

VERFAHREN ZUR AUSWAHL VON DATENDATEIEN ZUM HERUNTERLADEN

PROCÉDÉ POUR SÉLECTIONNER DES FICHIERS DE DONNÉES DE TÉLÉCHARGEMENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.02.2014 EP 14155789**

(43) Date of publication of application:
**28.12.2016 Bulletin 2016/52**

(73) Proprietor: **My Virtual Reality Software AS
0152 Oslo (NO)**

(72) Inventor: **KRISTIANSEN, Stig Ronald
0969 Oslo (NO)**

(74) Representative: **Kaminski Harmann
Patentanwälte AG
Landstrasse 124
9490 Vaduz (LI)**

(56) References cited:
**WO-A1-2006/033576     US-B1- 7 283 135**

• **PING YIN ET AL: "Cluster Based Real-time Rendering System for Large Terrain Dataset", COMPUTER AIDED DESIGN AND COMPUTER GRAPHICS, 2005. NINTH INTERNATIONAL CONFERENCE ON HONG KONG, CHINA 07-10 DEC. 2005, PISCATAWAY, NJ, USA,IEEE, 7 December 2005 (2005-12-07), pages 365-370, XP010900943, DOI: 10.1109/CAD-CG.2005.24 ISBN: 978-0-7695-2473-3**
• **NOGUERA J M ET AL: "Navigating large terrains using commodity mobile devices", COMPUTERS AND GEOSCIENCES, PERGAMON PRESS, OXFORD, GB, vol. 37, no. 9, 1 September 2010 (2010-09-01), pages 1218-1233, XP002669383, ISSN: 0098-3004, DOI: DOI:10.1016/J.CAGEO.2010.08.007**
• **LERBOUR R ET AL: "Adaptive streaming and rendering of large terrains: A generic solution", 17TH INTERNATIONAL CONFERENCE IN CENTRAL EUROPE ON COMPUTER GRAPHICS, VISUALIZATION AND COMPUTER VISION, WSCG'2009 - IN CO-OPERATION WITH EUROGRAPHICS, FULL PAPERS PROCEEDINGS - 17TH INTERNATIONAL CONFERENCE IN CENTRAL EUROPE ON COMPUTER GRAPHICS, VI, 2009, pages 25-32, XP002731823,**
• **REDDY M ET AL: "TerraVision II: visualizing massive terrain databases in VRML", IEEE COMPUTER GRAPHICS AND APPLICATIONS IEEE USA, vol. 19, no. 2, March 1999 (1999-03), pages 30-38, XP002731824, ISSN: 0272-1716**

## Description

The present invention pertains to a method for selecting a set of data files of a multitude of data files for downloading. It is an improved method for quickly selecting only the necessary collection of data blocks from a multitude of data blocks for describing three-dimensional data from any viewing position or direction without explicitly having to compute a level of detail for any coordinate in the data. The invention also pertains to rendering data of a three-dimensional surface, particularly a terrain, having a multitude of detail levels, and to visualizing the rendered data.

Rendering is the process of generating an image from a model such as a three-dimensional terrain model by means of a computer programme. The three-dimensional terrain model to be rendered can be a grid comprising elevation data, such as a Digital Elevation Model (DEM), a Digital Surface Model (DSM) or a Digital Terrain Model (DTM). The digital model may comprise data of a limited area, such as a model of a particular city or landscape, as well as a model of a continent or even the complete Earth.

Computer rendering of three-dimensional terrain images is generally known from prior art: US 7,551,172 B2 discloses a method for sending information representing three-dimensional images over a network, and US 6,496,189 B1 discloses a method and apparatus for displaying images of an area as seen from an interactively chosen viewpoint on a remote device.

When rendering large three-dimensional data, particularly in a mobile device, the memory of the device or the transfer speed of the data can become limiting factors. If the memory of the device is too small, not all of the data can be stored in the memory at the same time. If the network for the provision of the data is too slow, for instance in the case of a slow wireless internet connection, it may take too long to transfer all of the data over the network for an efficient use of the data. Therefore, it is important to partition the data in such a way that not all of the data needs to be stored in the memory of the device. This is especially important for mobile devices, which generally have particularly limited memory capacities.

A common solution is to subdivide the data into smaller data blocks, wherein each of the data blocks describes a section of the data. Additionally, it is a common solution to create data blocks with several representation versions of each section, the representation versions having different detail levels. This allows describing a collection of data blocks having detail levels that can be used to render the data with sufficient quality, while still only a fraction of the original size of the complete data set has to be load or transferred.

In a common method for rendering three-dimensional terrain data, a tree structure is used, which divides the data into tiles and different levels of detail, wherein each level of detail comprises more information than the previous one, thus allowing zooming in or out while keeping the rendering quality and preserving the amount of memory needed on the device.

As an example, reference is made to the publication "Cluster Based Real-time Rendering System for Large Terrain Dataset", by Ping Yin and Jiaoying Shi, Ninth International Conference on Computer Aided Design and Computer Graphics (CAD/CG 2005).

The usual way in known methods is to load all data sections from the lowest to the highest detail level while traversing down a tree structure, thus loading the higher detail levels only after the lower detail levels already have been loaded and displayed. With this known solution always some data - even if of a low detail level - is displayable, thus avoiding "holes" in the representation. However, it may instead be preferred that the amount of transferred data is as small as possible, especially when the data is transferred over a slow network connection or to a client device having limited computing or memory resources - as it is the case in many mobile devices.

It is therefore an object of the present invention to provide an enhanced method for loading surface data representing a portion of a three-dimensional surface into a memory.

It is a particular object of the invention to provide such a method that allows reducing data traffic in a network.

It is a particular object of the invention to provide such a method that avoids or reduces the amount of data that is downloaded from an external server.

It is a particular object of the invention to provide such a method that reduces the amount of data that has to be stored on a mobile device.

It is a further object of the present invention to provide a method for downloading and displaying the selected surface data.

Furthermore, it is an object of the present invention to provide such a method being executable on a hand-held mobile device, and to provide a hand-held device for execution of said method.

It is another object of the invention to provide a computer programme product for execution of said method, in particular on a hand-held device.

At least one of these objects is achieved by the method according to claim 1, the mobile device according to claim 8, the computer programme product according to claim 12 and/or the dependent claims of the present invention. According to the invention, at least one of these objects is achieved by an automatic pre-selection process before downloading the surface data. In particular, at least one of these objects is achieved by loading only exactly those data blocks that are needed for the display and nothing else, thus accepting temporary holes and gaps in the data until the loading and rendering of the data is complete.

The surface data particularly comprises texture data and elevation data of a three-dimensional surface.

In terms of this application, a hierarchical file system is a data structure comprising a multitude of data files which are arranged in a tree. The tree (which, by convention, is considered growing downwards) has a root value and sub-trees of children, represented as a set of linked nodes. Each node in the tree has zero or more child nodes, which are below it in the tree. A node that has at least one child node is the parent node of the child node. In terms of this application, a sibling node is a node that has the same parent node (i.e. two child nodes of the same parent node are sibling nodes), and an uncle node is a sibling node of the parent node.

In one embodiment of the method according to the invention, if the detail level does not meet the criteria of the quality factor, the selection process is resumed with a child node of the currently assessed node, and if the detail level meets the criteria of the quality factor, the data file of the currently assessed node is downloaded or designated for downloading from the server computer to the client device.

In a particular embodiment, designating a data file for downloading comprises storing an identifier of the data file in a node list.

A mobile client device adapted for downloading selected data files of a multitude of data files from a server computer is disclosed according to the claims.

The present invention also pertains to a computer programme product for execution of the method according to the claimed invention.

The invention in the following will be described in detail by referring to exemplary embodiments that are accompanied by figures, in which:

Fig. 1    shows the distribution of tiles in different detail levels of a representation of a terrain;

Fig. 2    shows an exemplary embodiment of a hand-held mobile device according to the invention, being connected with a server computer;

Fig. 3    illustrates a hierarchical file system, wherein data files at a plurality of different detail levels are stored as nodes of the file system;

Fig. 4    shows a flow chart illustrating an embodiment of a method according to the invention with a fully automatic selection process for selecting data representing a portion of a three-dimensional surface for downloading;

Fig. 5    shows an exemplary embodiment of a node list;

Fig. 6    shows a flow chart illustrating an exemplary embodiment of a method for displaying a representation of a portion of a three-dimensional surface.

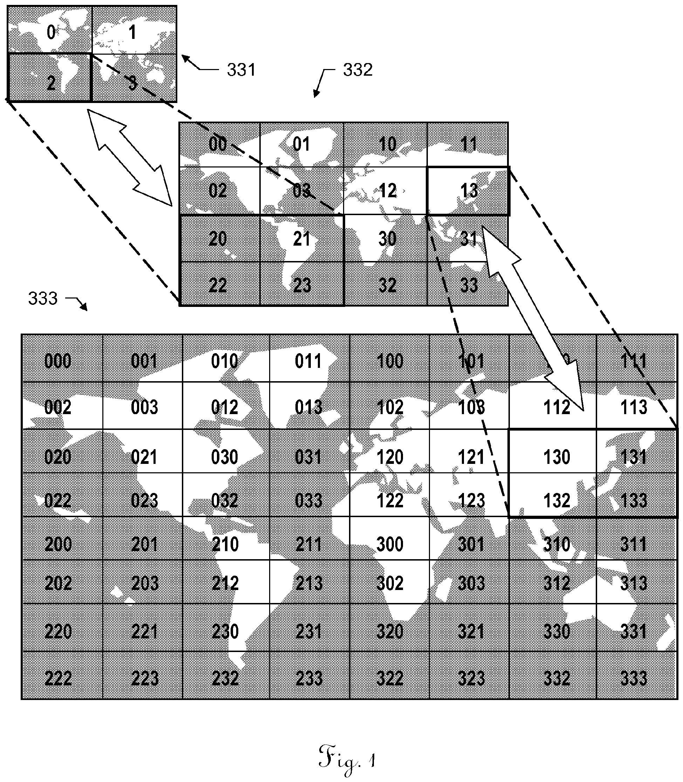

Figure 1 shows an example for a representation of a terrain in three different detail levels 331-333. The representation is subdivided into a multitude of tiles, each of which particularly comprising a bitmap of a part of the representation. Each tile is assigned a number from which its position and detail level can be derived. In particular, each tile is comprised by a certain data file. The first detail level comprises the lowest amount of details.

In this example, in the first detail level 331 the terrain is subdivided into the four rectangular tiles with the numbers "0", "1", "2" and "3", each corresponding to four tiles of the second detail level 332 which is, thus, subdivided into sixteen tiles. Tile "2" of the first detail level e.g. corresponds to tiles "20", "21", "22" and "23" of the second detail level. Each of the second detail level tiles corresponds to four tiles of the next higher level, the third detail level 333, so that this level is subdivided into sixty-four tiles. Tile "13" of the second detail level e.g. corresponds to tiles "130", "131", "132" and "133" of the second detail level.

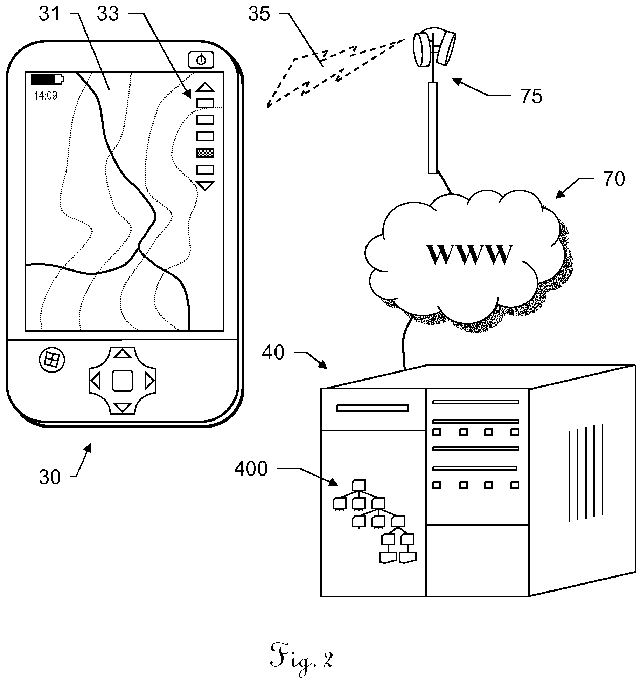

In Figure 2 an exemplary embodiments of a server-client-system for execution of the method according to the invention is depicted. The depicted system comprises an exemplary embodiment of a mobile device 30 according to the invention. The device is hand-held and comprises a rendering unit (not shown) for rendering data representing physical features of a portion of a three-dimensional surface, particularly by a method according to the invention, as described further below. The mobile device furthermore comprises a display 31, particularly designed as a touchscreen, the display 31 being adapted for displaying an image based on the data rendered by the rendering unit, particularly a representation of a three-dimensional terrain. The display 31 comprises a zoom functionality 33 for zooming in and out, i.e. changing the detail level of the displayed data. The device furthermore comprises locating means, such as a GNSS receiver, and communicating means for wirelessly receiving the data from a remote server 40.

The depicted mobile device 30 has communication means for establishing a connection with the server 40 via the internet 70 by means of a wireless connection 35 to a cell phone base station 75. On the remote server 40, data files are stored as nodes of a hierarchical file system 400, the data files comprising information about the three-dimensional terrain.

A request unit of the mobile device 30 sends a request to the remote server 40 to provide a certain data file for downloading, the data file e.g. comprising a bitmap of a part of the terrain in a certain resolution level. The remote server 40 then sends the requested file to the mobile device 30, so that the information is displayable on the display 31.

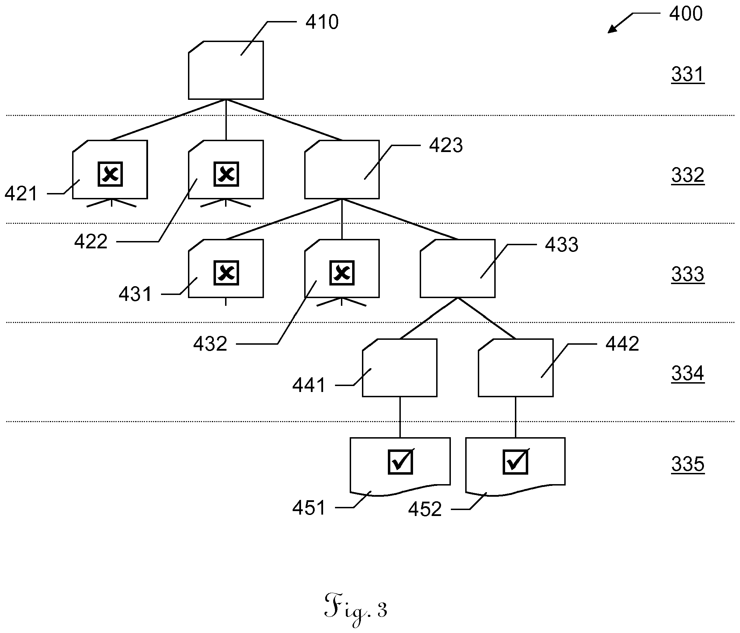

Figure 3 shows an exemplary hierarchical file system 400, wherein data files at a plurality of different detail levels 331-335 are stored as nodes of the file system 400. In general, a node of such a hierarchical file system 400 can have as few as one or two child nodes, or as many as several dozens.

In the first detail level 331 (comprising the fewest details) there is the top node 410. The top node 410 has three child nodes 421-423 in the second detail level 332, each of which having child nodes in the third detail level 333. For the sake of clarity, this is shown here for one of the nodes only: node 423 has three child nodes 431-433, each of which having child nodes in the fourth detail level 334. Again, this is shown for one of the nodes only: node 433 has two child nodes 431,432, each of which having a child node 451,452 in the fifth detail level 335 (comprising the most details).

An exemplary embodiment of the method according to the invention employs this hierarchical file system 400 to select those data files that are necessary for displaying a certain portion of the three-dimensional surface. For each node the method comprises the step of confirming whether data from the respective node is needed for display, and - if it is needed - of determining whether the detail level of the respective node is sufficient in order to display the portion in accordance with a certain quality factor. Thereby, if the detail level is sufficient, the respective node is designated for a later download request - for instance an identifier of the respective data file is stored in a node list. If the detail level is not sufficient, the method is repeated for a child node of the respective node.

In the depicted exemplary hierarchical file system 400 the method could e.g. begin with the top node 410. As data from this node would be visible in a representation of a portion of a three-dimensional surface which is to be displayed at the moment, and as the first detail level 331 is not sufficient, the method continues with the first child node 421 of the top node 410. In this example, this node 421 turns out to be not necessary for displaying as it would not be visible in the representation. It is therefore marked with a cross. Thus, the method continues with the next child node 422 of the top node 410. As this node 422 neither is necessary for displaying, the method continues with the third child node 423 of the top node 410. This node 423 turns out to be necessary for displaying; its detail level 332 is not sufficient, though, so that the method continues with its child nodes 431-433. In the end, two nodes 451,452 of the fifth detail level 335 are necessary and sufficient for displaying. These nodes 451,452 are therefore designated for downloading, e. g. added to a node list.

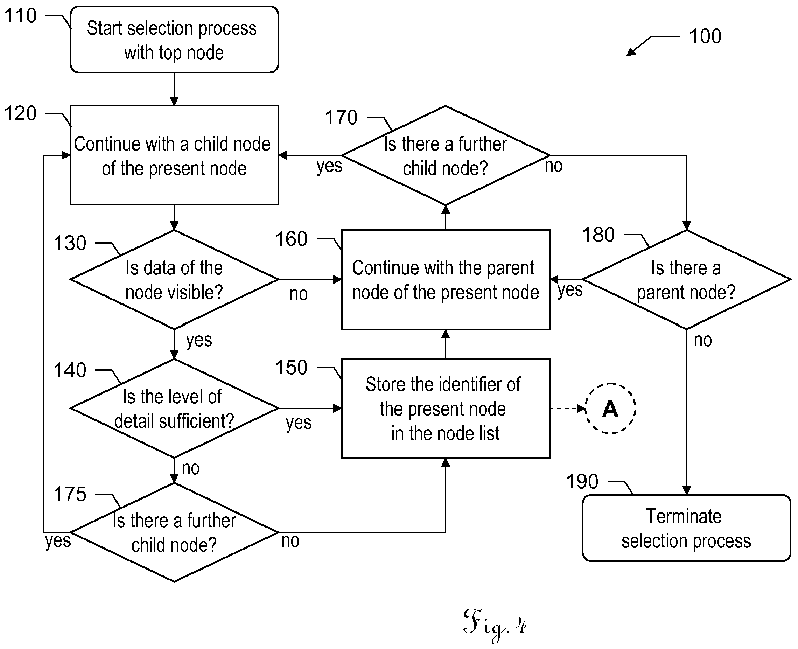

Figure 4 illustrates an exemplary embodiment of a method 100 for selecting data representing a portion of a three-dimensional surface for loading. The method relates to a hierarchical structure with nodes as depicted in Figure 3 and comprises an automatic selection process that is performed subsequently for a multitude of nodes of the hierarchical file system. In particular, the selection process is fully automatic, not requiring any user interaction.

The selection process starts in step 110 with the top node of the hierarchical file system. In step 120 the process goes downwards in the hierarchical structure to a child node of the top node. This child node is the first node to become the presently considered node of the selection process (in the following: "present node").

In step 130, it is assessed whether data comprised by the present node is needed for displaying an image with a representation of a particular portion of the three-dimensional surface, i.e. if the texture of the data would be visible in the representation if it were displayed on a display.

If the data is not needed, in step 160 the selection process continues one level higher in the hierarchical structure, i.e. going back to the parent node of the currently assessed node, where the selection process continues with another child node of that node, i.e. a sibling node of the last present node. If no unassessed child node of the parent node is left, the method continues with a parent node of the last present node's parent node and so on.

If in step 130 it is confirmed that the data of the present node is needed, the process continues with step 140, where it is then determined, whether the surface data of the currently assessed node meets the criteria of a resolution quality factor, e. g. whether the level of detail of the data of the present node is sufficient. The resolution quality factor can be defined for instance by a user or some external process and is particularly predefined.

A number of applicable quality factors for use in step 140 are described in WO 2006/033576 A1. Examples of how to calculate the quality factor may include one or more of the following factors:

• the distance to camera relative to size of the section;

• the actual area it would cover of the rendering surface; and/or

• the actual area a minimum enclosing volume would cover of the rendering surface.

If the surface data meets the criteria of the resolution quality factor, in step 150 an identifier of the present node is stored in a node list. If the surface data does not meet the criteria of the resolution quality factor, the process continues with step 175, determining whether the present node has a child node that is still unconsidered. If there is one, this child node becomes the new present node and the process starts again. If there is no further child node, the process continues with step 150, storing the identifier of the present node in the node list. Though the data has not met the criteria, there is no better data available.

After having stored the identifier of the present node in the node list, the process continues in step 160 with the parent node of the present node and with determining, in step 170, whether there is another, still unconsidered child node of the parent node. If there is one, this child node becomes the new present node and the process starts again. If there is no further child node, the process continues in step 160 with the parent node of the present node. If there is no parent node (determined in step 180), all necessary nodes have been considered and the process is determined (step 190).

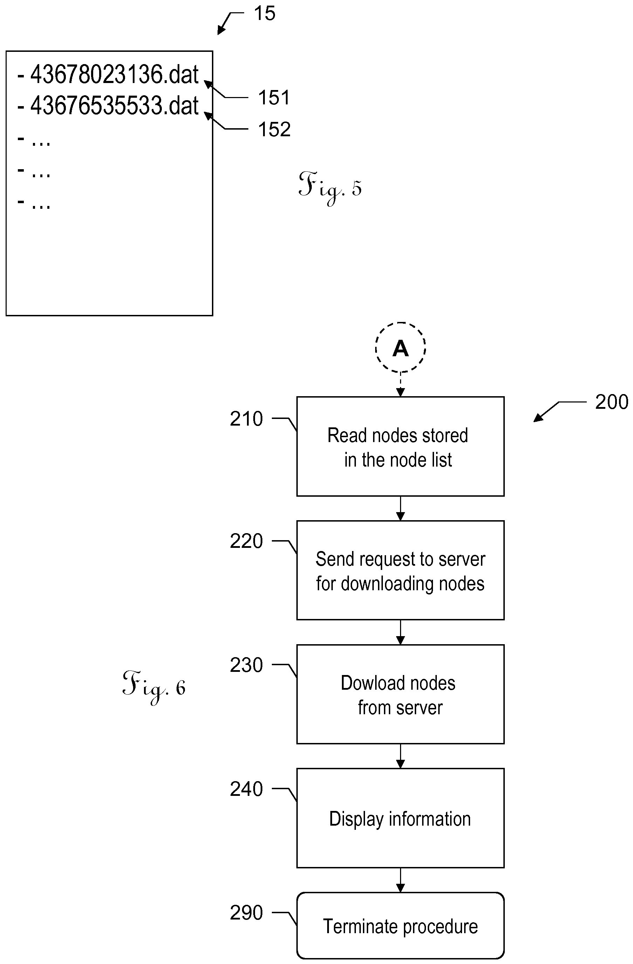

The computed result of the selection process is a node list, which is generated in step 150. This node list can be used for a further method part, which is described in Figure 6. Alternatively, in step 150 the data can also be downloaded and displayed immediately.

Optionally, step 130 may be skipped if it is desired to additionally load data sections which are not immediately visible from the viewing position but which may be visible a few moments later due to a change of the viewing position or angle.

Step 130 may also be used to adjust the quality factor used in step 140. In such cases the visibility calculated in step 130 may also be used to assign a priority for the order of which the data sections should be loaded or transferred over the network.

Figure 5 shows am exemplary embodiment of a node list 15, as created in step 150 of the selection process of the method 100 described in Figure 4. Therein, identifiers 151,152 of two data files designated for downloading from a server are stored, e. g. those corresponding to the two nodes 451,452 of Figure 3. The node list 15 is used for a request for downloading the data files corresponding to the identifiers 151,152 stored therein, in order to allow displaying the data of the respective data files.

Figure 6 illustrates an exemplary embodiment of an optional method part 200 for displaying a representation of a portion of a three-dimensional surface. This optional method part 200 can be a part of the method 100 described in Figure 4 and may e. g. be executed immediately after the termination of the process in step 190. Alternatively, it can be executed for every identifier that is stored in the node list in step 150 and while the automatic selection process continues.

The method part 200 comprises the automatic steps of requesting 220 data files from a server, downloading 230 the requested data files from the server, and displaying 240 information comprised by the downloaded data files. The requested data files have previously been read 210 from a node list 15 (see Figure 5), which has been created by the selection process of the method 100 described in Figure 4.

Although the invention is illustrated above, partly with reference to some preferred embodiments, it must be understood that numerous modifications and combinations of different features of the embodiments can be made. All of these modifications lie within the scope of the appended claims.

**Claims**

1. A computer-implemented method (100) for selecting a set of data files of a multitude of data files for downloading the selected set from a server computer (40) to a client device (30),

   • the multitude of data files comprising surface data in a plurality of different detail levels (331-335),
   • the surface data comprising texture data,
   • the surface data being associated with a portion of a three-dimensional surface in an image scene,
   • the data files being stored as nodes of a hierarchical file system (400) of the server computer (40), each node being either a parent node, or a child node, and
   • the method (100) comprising an automatic selection process that is performed subsequently for a multitude of nodes of the hierarchical file system (400),

wherein the selection process comprises assessing (130) whether the portion of a three-dimensional surface, which surface data of a currently assessed node is associated with, is visible in an actual image scene, if this image scene is displayed on a computer display (31), wherein

   • if the portion of the three-dimensional surface is not visible, the selection process is resumed with a sibling node or an uncle node of the currently assessed node, and
   • if the portion of the three-dimensional surface is visible, the selection process continues with determining (140) whether the surface data of the currently assessed node meets the criteria of a predefined resolution quality factor,

**characterized in that**
if the detail level meets the criteria of the quality factor, the data file of the currently assessed node is designated for downloading from the server computer (40) to the client device (30) by storing (150) an identifier (151, 152) of the data file in a node list (15), wherein the method further comprises

   • reading (210) identifiers (151, 152) of listed data files from the node list (15),
   • requesting (220) the listed data files from the server,
   • downloading (230) the requested data files from the server computer, and
   • displaying (240) information comprised by the downloaded data files; and

else, if the detail level does not meet the criteria of the quality factor, the selection process is resumed with a child node of the currently assessed node.

2. Method (100) according to claim 1, wherein each child node comprises surface data of a higher detail level (331-335) than its respective parent node.

3. Method (100) according to any one of the preceding claims, wherein
the first node that is assessed in the selection process is a root node (410) of the hierarchical file system (400) or a first child node (421) of the root node (410).

4. Method (100) according to any one of the preceding claims, wherein
the quality factor is calculated based on a distance from the surface to an observation point and at least on one of the following:

• a screen coverage factor related to how much a texture would cover a computer display surface when displayed;
• a scene coverage factor related to how much of a texture covers a surface located in a scene outside a computer display edge; and/or
• an actual area a minimum enclosing volume would cover of the rendering surface.

5. Method (100) according to claim 4, wherein the quality factor is based on the equation

$$Q = \frac{C}{A},$$

where C is the screen coverage factor and A is the distance.

6. Method (100) according to claim 4,
wherein the quality factor is defined as

$$Q = \frac{C + C_1}{A}$$

or as $Q = \frac{ID\sqrt{C + C_1}}{A}$, where C is the screen coverage factor, $C_1$ is the scene coverage factor, A is the distance, I is an importance factor defined by a user or an application, and D is a difference between a number of data files that are designated for downloading and/or downloaded from the server computer, respectively, and a number of data files stored in the server.

7. Method (100) according to any one of the preceding claims, wherein
the selection process is performed at least partially in the client device (30), particularly being a mobile device, the client device (30) being connected to the server computer (40), particularly via an Internet (70) connection.

8. Mobile client device (30) adapted for downloading selected data files of a multitude of data files from a server computer (40),

• the multitude of data files comprising surface data in a plurality of different detail levels (331-335), the surface data comprising texture data, and
• the surface data being associated with a portion of a three-dimensional surface in an image scene, and
• the data files being stored as nodes of a hierarchical file system (400) of the server computer (40), each node being either a parent node, or a child node,

wherein the mobile client device (30) comprises a rendering unit for rendering the surface data and a display (31) for displaying the representation, wherein the mobile client device (30) comprises a selection unit with a selection algorithm adapted for performing an automatic selection process subsequently for a multitude of nodes of the hierarchical file system (400), the selection process comprising assessing (130) whether the portion of a three-dimensional surface, which surface data of a currently assessed node is associated with, is visible in an actual image scene, if this image scene is displayed on the display (31), wherein

• if the portion of the three-dimensional surface is not visible, the selection process is resumed with a sibling node or an uncle node of the currently assessed node,
• if the portion of the three-dimensional surface is visible, the selection process continues with determining (140) whether the surface data of the currently assessed node meets the criteria of a predefined resolution quality factor, and **characterized in that**
• if the detail level meets the criteria of the quality factor, the data file of the currently assessed node is designated for a download request by storing (150) an identifier (151, 152) of the data file in a node list (15), and, else if the detail level does not meet the criteria of the quality factor, the selection process is resumed with a child node of the currently assessed node,

wherein the mobile client device (30) further comprises a request unit adapted to read (210) identifiers (151, 152) of listed data files from the node list (15), requesting (220) the listed data files from the server computer (40) and downloading (230) the requested data files.

9. Mobile client device (30) according to claim 8, comprising

• locating means, particularly a GNSS receiver, for determining a present location of the device and/or
• communicating means for wirelessly receiving the data from the server computer (40), in particular over the Internet (70).

10. Mobile client device (30) according to claim 8 or claim 9, wherein each child node comprises surface data of a higher detail level (331-335) than its respective parent node.

11. Mobile client device (30) according to any one of the claims 8 to 10, wherein
the quality factor is calculated based on a distance from the object to an observation point and on at least one of the following:

• a screen coverage factor related to how much a texture would cover a computer display surface when displayed;
• a scene coverage factor related to how much of a texture covers an object located in a scene outside a computer display edge; and/or
• an actual area a minimum enclosing volume would cover of the rendering surface.

12. Computer programme product, comprising programme code which is stored on a machine-readable medium, or being embodied by an electromagnetic wave comprising a programme code segment, and having computer-executable instructions for performing, in particular when run on calculation means of a mobile client device (30) according to any one of claims 8 to 11, the following steps of the method according to any one of the claims 1 to 7.

**Patentansprüche**

1. Computerimplementiertes Verfahren (100) zum Auswählen eines Satzes von Datendateien aus einer Mehrzahl von Datendateien zum Herunterladen des ausgewählten Satzes von einem Server-Computer (40) auf eine Client-Vorrichtung (30),

• wobei die Mehrzahl von Datendateien Oberflächendaten in einer Vielzahl von unterschiedlichen Detaillierungsgraden (331-335) umfasst, wobei die Oberflächendaten Texturdaten umfassen,
• wobei die Oberflächendaten mit einem Abschnitt einer dreidimensionalen Oberfläche in einer Bildszene assoziiert sind,
• wobei die Datendateien als Knoten eines hierarchischen Dateisystems (400) des Server-Computers (40) gespeichert sind, wobei jeder Knoten entweder ein Elternknoten oder ein Kindsknoten ist, und
• wobei das Verfahren (100) einen automatischen Auswahlprozess umfasst, der nachfolgend für eine Mehrzahl von Knoten des hierarchischen Dateisystems (400) durchgeführt wird,

wobei der Auswahlprozess ein Beurteilen (130) umfasst, ob der Abschnitt einer dreidimensionalen Oberfläche, mit welcher die Oberflächendaten eines gegenwärtig beurteilten Knotens assoziiert sind, in einer realen Bildszene sichtbar ist, wenn diese Bildszene auf einer Computeranzeige (31) angezeigt wird, wobei

• wenn der Abschnitt der dreidimensionalen Oberfläche nicht sichtbar ist, der Auswahlprozess mit einem Geschwisterknoten oder Onkelknoten des gegenwärtig beurteilten Knotens fortgesetzt wird, und
• wenn der Abschnitt der dreidimensionalen Oberfläche sichtbar ist, der Auswahlprozess zum Bestimmen (140) übergeht, ob die Oberflächendaten des gegenwärtig beurteilten Knotens die Kriterien eines vordefinierten Auflösungsqualitätsfaktors erfüllen,

**dadurch gekennzeichnet, dass**,
wenn der Detaillierungsgrad die Kriterien des Qualitätsfaktors erfüllt, die Datendatei des gegenwärtig beurteilten Knotens zum Herunterladen von dem Server-Computer (40) auf die Client-Vorrichtung (30) durch Speichern (150) einer Kennung (151, 152) der Datendatei in einer Knotenliste (15) bestimmt wird, wobei das Verfahren ferner Folgendes umfasst:

• Lesen (210) von Kennungen (151, 152) von aufgelisteten Datendateien aus der Knotenliste (15),
• Anfordern (220) der aufgelisteten Datendateien von dem Server,
• Herunterladen (230) der angeforderten Datendateien von dem Server-Computer, und
• Anzeigen (240) von Informationen, die in den heruntergeladenen Datendateien enthalten sind; und

andernfalls, wenn der Detaillierungsgrad die Kriterien des Qualitätsfaktors nicht erfüllt, der Auswahlprozess mit einem Kindsknoten des gegenwärtig beurteilten Knotens fortgesetzt wird.

2. Verfahren (100) nach Anspruch 1, wobei jeder Kindsknoten Oberflächendaten eines höheren Detaillierungsgrads (331-335) als sein entsprechender Elternknoten umfasst.

3. Verfahren (100) nach einem der vorhergehenden Ansprüche, wobei der erste Knoten, der in dem Auswahlprozess beurteilt wird, ein Wurzelknoten (410) des hierarchischen Dateisystems (400) oder ein erster Kindsknoten (421) des Wurzelknotens (410) ist.

4. Verfahren (100) nach einem der vorhergehenden Ansprüche, wobei der Qualitätsfaktor auf der Grundlage eines Abstands von der Oberfläche zu einem Beobachtungspunkt und mindestens einem der Folgenden berechnet wird:

- einem Bildschirmabdeckungsfaktor in Bezug darauf, in welchem Ausmaß eine Textur eine Computeranzeigeoberfläche abdecken würde, wenn sie angezeigt wird;
- einem Szenenabdeckungsfaktor in Bezug darauf, wie viel einer Textur eine Oberfläche abdeckt, die sich in einer Szene außerhalb einer Computeranzeigenkante befindet; und/oder
- einem realen Bereich, den ein minimales Umschließungsvolumen von der Darstellungsoberfläche abdecken würde.

5. Verfahren (100) nach Anspruch 5, wobei der Qualitätsfaktor auf der folgenden Gleichung basiert:

$$Q = \frac{C}{A},$$

wobei C der Bildschirmabdeckungsfaktor ist und A der Abstand ist.

6. Verfahren (100) nach Anspruch 5, wobei der Qualitätsfaktor definiert ist als

$$Q = \frac{C + C_1}{A}$$

oder als $Q = \frac{ID\sqrt{C + C_1}}{A}$, wobei C der Bildschirmabdeckungsfaktor ist, $C_1$ der Szenenabdeckungsfaktor ist, A der Abstand ist, I ein Wichtigkeitsfaktor ist, der durch einen Benutzer oder eine Anwendung definiert ist, und D eine Differenz zwischen einer Anzahl von Datendateien, die zum Herunterladen von dem Server-Computer bestimmt sind und/oder von diesem heruntergeladen wurden, und einer Anzahl von Datendateien ist, die auf dem Server gespeichert sind.

7. Verfahren (100) nach einem der vorhergehenden Ansprüche, wobei der Auswahlprozess mindestens teilweise in der Client-Vorrichtung (30) durchgeführt wird, bei der sich insbesondere um eine mobile Vorrichtung handelt, wobei die Client-Vorrichtung (30) mit dem Server-Computer (40) verbunden ist, insbesondere über eine Internet-(70)-Verbindung.

8. Mobile Client-Vorrichtung (30), die zum Herunterladen ausgewählter Datendateien aus einer Mehrzahl von Datendateien von einem Server-Computer (40) ausgelegt ist,

- wobei die Mehrzahl von Datendateien Oberflächendaten in einer Vielzahl von unterschiedlichen Detaillierungsgraden (331-335) umfasst,
- wobei die Oberflächendaten mit einem Abschnitt einer dreidimensionalen Oberfläche in einer Bildszene assoziiert sind, und
- wobei die Datendateien als Knoten eines hierarchischen Dateisystems (400) des Server-Computers (40) gespeichert sind, wobei jeder Knoten entweder ein Elternknoten oder ein Kindsknoten ist,

wobei die mobile Client-Vorrichtung (30) eine Rendereinheit zum Rendern der Oberflächendaten und eine Anzeige (31) zum Anzeigen der Darstellung umfasst,
**dadurch gekennzeichnet, dass**
die mobile Client-Vorrichtung (30) eine Auswahleinheit mit einem Auswahlalgorithmus umfasst, der zum nachfolgenden Durchführen eines automatischen Auswahlprozesses für eine Mehrheit von Knoten des hierarchischen Dateisystems (400) ausgelegt ist, wobei der Auswahlprozess Beurteilen (130) umfasst, ob der Abschnitt einer dreidimensionalen Oberfläche, wobei die Oberflächendaten eines gegenwärtig beurteilten Knotens damit assoziiert sind, in einer realen Bildszene sichtbar ist, wenn diese Bildszene auf der Anzeige (31) angezeigt wird, wobei

- wenn der Abschnitt der dreidimensionalen Oberfläche nicht sichtbar ist, der Auswahlprozess mit einem Geschwisterknoten oder Onkelknoten des gegenwärtig beurteilten Knotens fortgesetzt wird,
- wenn der Abschnitt der dreidimensionalen Oberfläche sichtbar ist, der Auswahlprozess zum Bestimmen (140) übergeht, ob die Oberflächendaten des gegenwärtig beurteilten Knotens die Kriterien eines vordefinierten Auflösungsqualitätsfaktors erfüllen, und
- wenn der Detaillierungsgrad die Kriterien des Qualitätsfaktors erfüllt, die Datendatei des gegenwärtig beurteilten Knotens für eine Herunterladungsanforderung durch Speichern (150) einer Kennung (151, 152) der Datendatei in einer Knotenliste (15) bestimmt wird, und andernfalls, wenn der Detaillierungsgrad die Kriterien des Qualitätsfaktors nicht erfüllt, der Auswahlprozess mit einem Kindsknoten des gegenwärtig beurteilten Knotens fortgesetzt wird,

wobei die mobile Client-Vorrichtung (30) ferner eine Anforderungseinheit umfasst, die zum Lesen (210) von Kennungen (151, 152) von aufgelisteten Datendateien aus der Knotenliste (15), Anfordern (220) der aufgelisteten Datendateien von dem Server-Computer (40) und Herunterladen (230) der angeforderten Datendateien ausgelegt ist.

9. Mobile Client-Vorrichtung (30) nach Anspruch 8, wobei

• Ortungsmittel, insbesondere ein GNSS-Empfänger, zum Bestimmen eines aktuellen Standorts der Vorrichtung und/oder
• Kommunikationsmittel zum drahtlosen Empfangen der Daten von dem Server-Computer (40), insbesondere über das Internet (70).

10. Mobile Client-Vorrichtung (30) nach Anspruch 8 oder Anspruch 9, wobei jeder Kindsknoten Oberflächendaten eines höheren Detaillierungsgrads (331-335) als sein entsprechender Elternknoten umfasst.

11. Mobile Client-Vorrichtung (30) nach einem der Ansprüche 8 bis 10, wobei der Qualitätsfaktor auf der Grundlage eines Abstands von dem Objekt zu einem Beobachtungspunkt und mindestens einem der Folgenden berechnet wird:

• einem Bildschirmabdeckungsfaktor in Bezug darauf, in welchem Ausmaß eine Textur eine Computeranzeigeoberfläche abdecken würde, wenn sie angezeigt wird;
• einem Szenenabdeckungsfaktor in Bezug darauf, wie viel einer Textur eine Oberfläche abdeckt, die sich in einer Szene außerhalb einer Computeranzeigenkante befindet; und/oder
• einem realen Bereich, den ein minimales Umschließungsvolumen von der Darstellungsoberfläche abdecken würde.

12. Computerprogrammprodukt, umfassend Programmcode, der auf einem maschinenlesbaren Medium gespeichert ist oder durch eine elektromagnetische Welle realisiert wird, die ein Programmcodesegment umfasst, und computerausführbare Anweisungen zum Durchführen, insbesondere bei Ausführung auf Rechenmitteln einer mobilen Client-Vorrichtung nach einem der Ansprüche 8 bis 11, der folgenden Schritte des Verfahrens nach einem der Ansprüche 1 bis 7 aufweist.

**Revendications**

1. Procédé implémenté par ordinateur (100) pour sélectionner un ensemble de fichiers de données d'une multitude de fichiers de données pour télécharger l'ensemble sélectionné depuis un ordinateur serveur (40) vers un dispositif client (30),

• la multitude de fichiers de données comprenant des données de surface dans une pluralité de niveaux de détail différents (331 à 335),
• les données de surface comprenant des données de texture,
• les données de surface étant associées à une portion d'une surface tridimensionnelle dans une scène d'image,
• les fichiers de données étant stockés sous forme de nœuds d'un système hiérarchique de fichiers (400) de l'ordinateur serveur (40), chaque nœud étant soit un nœud parent soit un nœud enfant,
et
• le procédé (100) comprenant un processus de sélection automatique qui est réalisé ultérieurement pour une multitude de nœuds du système hiérarchique de fichiers (400),

dans lequel le processus de sélection comprend le fait d'évaluer (130) si la portion d'une surface tridimensionnelle, à laquelle des données de surface d'un nœud en cours d'évaluation sont associées, est visible dans une scène d'image réelle, si cette scène d'image est affichée sur un afficheur d'ordinateur (31), dans lequel

• si la portion de la surface tridimensionnelle n'est pas visible, le processus de sélection est repris avec un nœud frère ou un nœud oncle du nœud en cours d'évaluation, et
• si la portion de la surface tridimensionnelle est visible, le processus de sélection continue avec le fait de déterminer (140) si les données de surface du nœud en cours d'évaluation satisfont les critères d'un facteur de qualité de résolution prédéfini,

**caractérisé en ce que**
si le niveau de détail satisfait les critères du facteur de qualité, le fichier de données du nœud en cours d'évaluation est désigné pour être téléchargé depuis l'ordinateur serveur (40) vers le dispositif client (30) en stockant (150) un identifiant (151, 152) du fichier de données dans une liste de nœuds (15), dans lequel le procédé comprend en outre

• la lecture (210) d'identifiants (151, 152) de fichiers de données listés à partir de la liste de nœuds (15),

• la demande (220) des fichiers de données listés auprès du serveur,
• le téléchargement (230) des fichiers de données demandés depuis l'ordinateur serveur, et
• l'affichage (240) d'informations comprises par les fichiers de données téléchargés ; et

sinon, si le niveau de détail ne satisfait pas les critères du facteur de qualité, le processus de sélection est repris avec un nœud enfant du nœud en cours d'évaluation.

2. Procédé (100) selon la revendication 1, dans lequel chaque nœud enfant comprend des données de surface d'un niveau de détail (331 à 335) plus élevé que son nœud parent respectif.

3. Procédé (100) selon l'une quelconque des revendications précédentes, dans lequel
le premier nœud qui est évalué dans le processus de sélection est un nœud racine (410) du système hiérarchique de fichiers (400) ou un premier nœud enfant (421) du nœud racine (410).

4. Procédé (100) selon l'une quelconque des revendications précédentes, dans lequel
le facteur de qualité est calculé en fonction d'une distance entre la surface et un point d'observation et d'au moins l'un des éléments suivants :

• un facteur de couverture d'écran concernant le degré selon lequel une texture devrait couvrir une surface d'affichage d'ordinateur lorsqu'elle est affichée ;
• un facteur de couverture de scène concernant le degré selon lequel une texture couvre une surface située dans une scène en dehors d'un bord d'affichage d'ordinateur ; et/ou
• une aire réelle de la surface de rendu qu'un volume d'encloisonnement minimal couvrirait.

5. Procédé (100) selon la revendication 4, dans lequel le facteur de qualité est basé sur l'équation

$$Q = \frac{C}{A},$$

où C est le facteur de couverture d'écran et A est la distance.

6. Procédé (100) selon la revendication 4, dans lequel le facteur de qualité est défini en tant que

$$Q = \frac{C + C_1}{A}$$

ou en tant que $Q = \dfrac{ID\sqrt{C + C_1}}{A}$, où C est le facteur de couverture d'écran, $C_1$ est le facteur de couverture de scène, A est la distance, I est un facteur d'importance défini par un utilisateur ou une application, et D est une différence entre un nombre de fichiers de données qui sont désignés pour un téléchargement et/ou téléchargés depuis l'ordinateur serveur, respectivement, et un nombre de fichiers de données stockés dans le serveur.

7. Procédé (100) selon l'une quelconque des revendications précédentes, dans lequel
le processus de sélection est réalisé au moins partiellement dans le dispositif client (30), qui est notamment un dispositif mobile, le dispositif client (30) étant connecté à l'ordinateur serveur (40), notamment via une connexion Internet (70).

8. Dispositif client mobile (30) adapté pour télécharger des fichiers de données sélectionnés d'une multitude de fichiers de données depuis un ordinateur serveur (40),

• la multitude de fichiers de données comprenant des données de surface dans une pluralité de niveaux de détail différents (331 à 335),
• les données de surface étant associées à une portion d'une surface tridimensionnelle dans une scène d'image, et
• les fichiers de données étant stockés sous forme de nœuds d'un système hiérarchique de fichiers (400) de l'ordinateur serveur (40), chaque nœud étant soit un nœud parent soit un nœud enfant,

dans lequel le dispositif client mobile (30) comprend une unité de rendu pour rendre les données de surface et un afficheur (31) pour afficher la représentation,
**caractérisé en ce que**
le dispositif client mobile (30) comprend une unité de sélection avec un algorithme de sélection adapté pour réaliser un processus de sélection automatique ultérieurement pour une multitude de nœuds du système hiérarchique de fichiers (400), le processus de sélection comprenant le fait d'évaluer (130) si la portion d'une surface tridimensionnelle, à laquelle des données de surface d'un nœud en cours d'évaluation sont associées, est visible dans une scène d'image réelle, si cette scène d'image est affichée sur l'afficheur (31), dans lequel

• si la portion de la surface tridimensionnelle n'est pas visible, le processus de sélection est repris avec un nœud frère ou un nœud oncle du nœud en cours d'évaluation,

• si la portion de la surface tridimensionnelle est visible, le processus de sélection continue avec le fait de déterminer (140) si les données de surface du nœud en cours d'évaluation satisfont les critères d'un facteur de qualité de résolution prédéfini, et

• si le niveau de détail satisfait les critères du facteur de qualité, le fichier de données du nœud en cours d'évaluation est désigné pour une demande de téléchargement en stockant (150) un identifiant (151, 152) du fichier de données dans une liste de nœuds (15), et sinon, si le niveau de détail ne satisfait pas les critères du facteur de qualité, le processus de sélection est repris avec un nœud enfant du nœud en cours d'évaluation,

dans lequel le dispositif client mobile (30) comprend en outre une unité de demande adaptée pour lire (210) des identifiants (151, 152) de fichiers de données listés depuis la liste de nœuds (15), demander (220) les fichiers de données listés à l'ordinateur serveur (40) et télécharger (230) les fichiers de données demandés.

9. Dispositif client mobile (30) selon la revendication 8, dans lequel

• des moyens de localisation, notamment un récepteur GNSS, pour déterminer une localisation présente du dispositif et/ou

• des moyens de communication pour recevoir sans fil les données en provenance de l'ordinateur serveur (40), notamment par Internet (70).

10. Dispositif client mobile (30) selon la revendication 8 ou la revendication 9, dans lequel chaque nœud enfant comprend des données de surface d'un niveau de détail (331 à 335) plus élevé que son nœud parent respectif.

11. Dispositif client mobile (30) selon l'une quelconque des revendications 8 à 10, dans lequel le facteur de qualité est calculé en fonction d'une distance entre l'objet et un point d'observation et d'au moins l'un des éléments suivants :

• un facteur de couverture d'écran concernant le degré selon lequel une texture devrait couvrir une surface d'affichage d'ordinateur lorsqu'elle est affichée ;

• un facteur de couverture de scène concernant le degré selon lequel une texture couvre un objet situé dans une scène en dehors d'un bord d'affichage d'ordinateur ; et/ou

• une aire réelle de la surface de rendu qu'un volume d'encloisonnement minimal couvrirait.

12. Produit-programme d'ordinateur, comprenant un code de programme qui est stocké sur un support lisible par machine, ou qui est matérialisé par une onde électromagnétique comprenant un segment de code de programme, et ayant des instructions exécutables par ordinateur pour réaliser, notamment lorsqu'elles sont exécutées sur des moyens de calcul d'un dispositif client mobile (30) selon l'une quelconque des revendications 8 à 11, les étapes suivantes du procédé selon l'une quelconque des revendications 1 à 7.

*Fig. 1*

Fig. 2

*Fig.* 3

*Fig. 4*

EP 3 108 453 B1

15

- 43678023136.dat    151
- 43676535533.dat    152
- ...
- ...
- ...

*Fig. 5*

**A**

200

210 — Read nodes stored in the node list

220 — Send request to server for downloading nodes

230 — Dowload nodes from server

240 — Display information

290 — Terminate procedure

*Fig. 6*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7551172 B2
- US 6496189 B1

- WO 2006033576 A1

**Non-patent literature cited in the description**

- **PING YIN ; JIAOYING SHI.** Cluster Based Real-time Rendering System for Large Terrain Dataset. *Ninth International Conference on Computer Aided Design and Computer Graphics (CAD/CG 2005),* 2005